# EUROPEAN PATENT APPLICATION

(11) **EP 2 654 007 A2**
(43) Date of publication of application: **23.10.2013**
(21) Application number: 13003522.3
(22) Date of filing: 17.11.2009
(51) Int. Cl.: G06Q 30/02, G06Q 20/04, G06Q 20/20

(54) **Method for redeeming a plurality of vouchers**

(30) Priority: 17.11.2008 GB 0820995
(62) Divisional of application: 09796025.6
(71) Applicant: Minerva Products LLP, Stratford upon Avon Warwickshire CV37 6JG (GB)
(72) Inventor: Tymm, David, London, SE1 0HS (GB)
(74) Representative: Symons, Rupert Jonathan

(57) **Abstract**

A method for redeeming a plurality of vouchers distributed via portable electronic devices in a single transaction in which a first voucher having a number (1) and a cash value (3) is entered into a standards compliant POS terminal (9), which generates a standards compliant validation request message (15) and sends it to an acquirer (14) which in tum forwards it to a service provider (6). The message is then authenticated. If the voucher number (1) is valid, a flag (16) in the message (15) is set to "preauthorised". The service provider (6) searches for additional vouchers associated with the voucher and generates a pre-authorisation message including the numbers (18, 19) of any additional vouchers. The messages are then transmitted to the terminal (9) to inform the customer (13) accordingly. The customer can then select the vouchers to be redeemed and the terminal (9) sends redemption messages (20, 21) to the service provider (6) which cancels the selected vouchers and generates messages (22, 23) authorising payment corresponding to the vouchers' cash value.

## Description

The invention relates to a method for authorising the redemption of a plurality of vouchers in a single transaction, in particular, but not exclusively, vouchers distributed via portable electronic devices.

Cash value vouchers are widely used as a promotional tool and to induce customer loyalty via loyalty schemes. Traditionally, distribution of these vouchers has been paper-based necessitating that customers produce a physical printed voucher at the point of sale in order to redeem said vouchers. Generally, the printed vouchers include a barcode which can be scanned at the point of sale (POS) terminal to allow redemption. The presence of a barcode reduces the transaction risk for the retailer and decreases the risk of fraud. Nevertheless, conventional voucher redemption methods tend to have high implementation costs and also cause unnecessary delay at the point of sale. Further, customers are obliged to physically carry vouchers which they wish to redeem; therefore, it will only ever be possible to redeem those vouchers which the customers present at the point of sale. Accordingly, any other vouchers that the retailer may have provided the customers with will not be redeemed. Consequently, it is not uncommon for customers to miss the opportunity to redeem vouchers, which may adversely affect the information that can be derived from the voucher redemption. Moreover, retailers have to continually bear the high costs of setting up voucher schemes without reassurance that the customers will redeem the vouchers. Due to these constraints, voucher schemes need to be relatively large to recoup the high fixed costs.

In addition, it is known that consumers dislike carrying paper vouchers with them and as a consequence, redemption rates of paper vouchers can be very low unless they are of high face-value. However, paper vouchers of high face-value imply a significant financial risk as reproducing vouchers fraudulently has been made easier by continuous advances in technology.

There have been a number of initiatives to address these problems by distributing vouchers via electronic devices. In principle, these proposals have lower distribution costs than paper-based systems and reduce the risk of fraudulent reproduction or over-redemption. This is particularly effective with small-scale voucher schemes as the risks are reduced by redeeming the voucher electronically.

Currently, some systems provide electronic vouchers by sending a barcode image to a mobile phone device which can subsequently be scanned as an ordinary barcode by standard point of sale equipment. However, these systems experience problems when the receiving mobile device does not support the required graphics or because, in practice, the scanner is often unable to scan the code from the screen display.

Furthermore, there is currently no industry standard for graphical display on mobile telephones and the various manufacturers display bar codes differently. The make and model of the handset must therefore be identified prior to sending a barcode to enable said code to be displayed appropriately on the mobile device. As developing and maintaining this data is a time-consuming and expensive exercise, most systems are set up to be compatible with the most popular and widely available handsets only. Moreover, trying to establish the make and model of a handset is made more difficult by the fact that customers are generally unwilling or unable to provide this information and mobile network operators do not readily supply this information to third-parties, although they have access to it.

An additional problem with barcode systems is that the risk of multiple redemptions still exists as the code itself does not provide any means of determining whether the voucher has been used before.

Another solution has been proposed in GB2397684 (Smart Voucher) in which a 19 digit payment card number is sent to a mobile phone together with the value of the voucher to be redeemed. The redemption can be carried out by keying in the data via a dedicated terminal. This approach faces a number of problems as it is underpinned by the notion of an "account" and a "balance". As a result, it involves relatively high infrastructure costs associated with enabling a participating retailer to apply credit to the "account".

Further, existing legislation requires operators to implement a KYC ("Know Your Customer") process to prevent such "accounts" and "balances" to be used for money-laundering purposes. KYC processes are onerous, expensive and time-consuming to implement. In addition, they are unpopular with retailers and customers. The prevailing geo-political climate indicates such processes and scrutiny will intensify in the future. Moreover, the provision of the voucher value together with the voucher represents a potential security gap.

EP1262930A2 relates to Voucher Redemption in Mobile Networks. It requires the mobile to directly interface with the retailer's transaction system in order to redeem the voucher. The voucher is then authenticated by means of a secure method, using a "secure key". This encounters problems associated with reliably linking the mobile with the retail system in order to redeem the voucher. It also requires additional hardware. Furthermore, this method does not prevent over redemption, specifically. It allows redeeming the same voucher twice.

AU 2003236476 relates to a voucher purchase and redemption system. Again, it requires the mobile to directly interface with the retailer's transaction system in order to redeem the voucher. Accordingly, this system is also hindered by unreliable connections between mobiles and retail systems.

All these methods illustrate currently used methods for authorising the redemption of electronic vouchers. However, these known solutions still experience one disadvantage, which disadvantage is shared with traditional paper-based voucher schemes, they merely allow a single voucher to be validated at a time.

The present invention seeks to provide method for authorising the redemption of a plurality of vouchers in a single transaction.

According to the present invention there is provided a method for enabling redemption of a plurality of vouchers in a single transaction using a standards compliant electronic funds transfer point of sale terminal, comprising the steps of:
a) providing a first voucher having an alphanumeric number and a cash value, which cash value is not related to the number, which voucher is associated with a unique reference number,
b) generating and sending a standards compliant message from the standards compliant electronic funds transfer point of sale terminal to a service provider,
c) identifying the unique reference number associated with the first voucher,
d) searching a database for vouchers associated with said unique reference number, converting the first redemption message into a pre-authorisation message,
e) generating a pre-authorisation message for the further voucher or vouchers associated with the unique reference number, and
f) sending a pre-authorisation message for each of the vouchers associated with the unique reference number to the standards compliant point of sale terminal.

Preferably, the alphanumeric numbers of the first voucher and the voucher or vouchers associated with the unique reference number comprise a first element, said first element being identical in the first voucher and the associated vouchers, and a second element, said second element being different in each voucher associated with the unique reference number thereby enabling identification of all vouchers having an identical first element and a second element distinct from the second element of the first voucher, so that a pre-authorisation message for each of said vouchers can be sent to the standards compliant point of sale terminal.

In a preferred embodiment, the standards compliant message comprises a merchant ID and the service provider checks that the merchant can participate in the redemption of the voucher and, in the event that the merchant cannot participate, the service provider proceeds with the authorisation or non-authorisation of the redemption of the first voucher.

Preferably, the pre-authorisation messages for the vouchers associated the unique reference number are linked by the terminal thereby enabling redemption of all or none of the vouchers associated to the unique reference number.

In a preferred embodiment, selective redemption of one or more associated vouchers is enabled by the terminal such that a customer may decide which vouchers, if any, will be redeemed.

Preferably, the terminal enables selective redemption of one or more associated vouchers.

In a preferred embodiment, the first voucher is distributed via a portable electronic device. In another preferred embodiment, the first voucher is distributed via a card having a chip or a magnetic stripe. In yet another embodiment, the first voucher is distributed via a contactless card. In a further embodiment, the first voucher is a paper voucher. In a preferred embodiment, the first voucher comprises a barcode.

Preferably, the service provider authorizes or refuses redemption of a voucher or a plurality of vouchers only if conditions of use specified on the database have been met.

In addition, the present invention can be easily implemented as it uses standard POS terminals and does not require any additional hardware or new connections. Moreover, it

Preferably, when any of the vouchers are redeemable a plurality of times, the service provider stores a balance of uses against the voucher number, which balance is reduced on redemption.

The present invention overcomes the need for customers to carry paper vouchers; therefore, it reduces customer inconvenience arid costs associated with running a paper-based voucher scheme. Further, it could encourage retailers to decrease the amount of paper currently used for transactions, thereby reducing the cost and environmental impact of paper-based schemes.

Moreover, it improves redemption rates and efficacy as it is no longer necessary for the customer to present all vouchers at the point of sale, thereby providing a more convenient way of redeeming vouchers. The present invention also encourages customers to buy a plurality of products they are interested in at a more convenient price thereby increasing redemption rates. Further, customer satisfaction and customer loyalty by reminding the customer that a plurality of vouchers may be used in a transaction.

The present invention may also be useful for acquiring information on customer habits and behaviour as all vouchers linked to a URN could easily be listed and analysed by the service provider.

In addition, it reduces the time terminal operators spend in voucher-redeeming transactions, as it allows a plurality of vouchers to be redeemed during the same transaction. Additionally, the present invention allows retailers to reduce the costs associated with setting up several voucher schemes simultaneously. In light of the foregoing, the present invention can be used to increase customer loyalty as customers experience minimum inconvenience to retrieve a number of available vouchers in a single transaction.

The present invention also bypasses the problems experienced by other electronic voucher schemes as it is a universally adoptable system, it is not subject to the ability of scanners to read a barcode displayed in unconventional carriers. Further it minimises the risk of fraudulent redemption or over-redemption as the initial alphanumeric string can be linked to a specific electronic device number.

In addition, the present invention can be easily implemented as it uses standard POS terminals and does not require any additional hardware or any new connections. Moreover, it does not create the need to implement a "Know your Customer" process as the notions of "account" and "balance", representative of cash value that may be used as a ubiquitous form of payment, are absent.

Exemplary embodiments of the present invention will now be described in greater detail with reference to examples and figures.
Figure 1a shows a representation of a paper receipt containing a redemption reference code and a record of a transaction wherein a voucher was redeemed.
Figure 1b shows a receipt of an unauthorised transaction containing a standard refusal message.
Figure 2 shows a schematic representation of a method according to the present invention.

The electronic funds transfer (EFT) network is one of the most widely adopted point of sale equipment and is now even found in most small retail stores and businesses. The electronic funds transfer network operates in compliance with international standards, currently, ISO/IEC 78 121:2000 and ANSI X4.13. These standards apply to both individual payment terminals and also integrated electronic point of sale equipment, wherein the payment terminal includes a cash register.

Recently, mobile telephone pre-pay top up terminals have also become widely used as POS equipment. They have been installed in many smaller retailers such as convenience stores in addition to confectioners, tobacconists and newsagents (CTNs). Many if not most of these terminals are also capable of processing EFT transactions as they use the same industry standard message and redemption protocols.

When the EFT method is used by a customer or retailer wishing to validate a transaction request, the voucher or card number is entered into the POS terminal via a magnetic stripe, a chip, a barcode, an electronic device or by manually keying the voucher or card number into the POS terminal. Then, the POS terminal generates a validation request message and sends it to an acquirer, which acquirer checks that the data is in the correct format and then forwards the request to the voucher or card issuer. Next, the card issuer either authorises or refuses the request and transmits this information back to the acquirer. The acquirer then transmits the resultant authorisation or refusal to the POS terminal. In the present invention, the acquirer may be replaced by a service provider, which service provider stores voucher or card numbers in association with a unique reference number (URN). Alternatively, the acquirer forwards the message to a service provider.

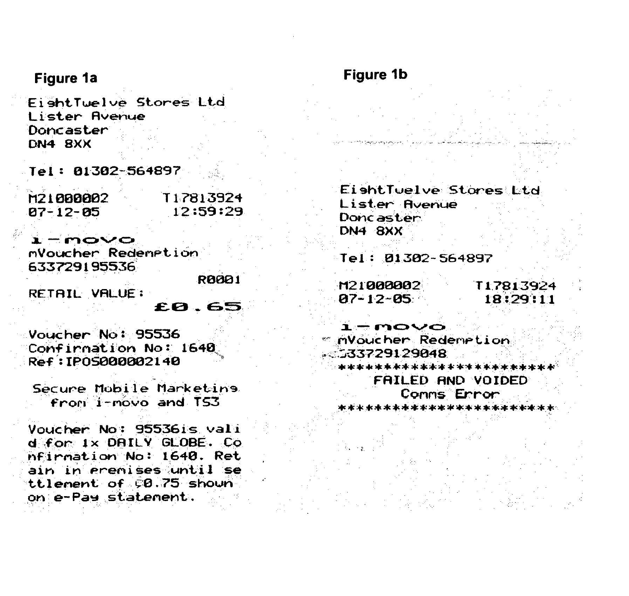

Figure 1a shows a paper receipt 12 of a transaction authorised using the method described below. The receipt 12 provides a record of the retailer 4 and its contact details 5, the voucher number 1, the date 7, time 8 and POS terminal ID 9, service provider 6, authorisation number 2, redemption code 10 and cash value of the voucher 3. When a voucher 11 is presented for redemption at the POS terminal, the operator enters the voucher number 1.

Figure 1b shows a paper receipt 12 of a transaction refused using the method described below. The receipt 12 provides a record of the standard refusal message returned to the POS terminal. Further, it also shows the retailer's name 4 and contact details 5. The receipt 12 may also show the date 7, time 8, terminal ID 9 and the name of the service provider 6.

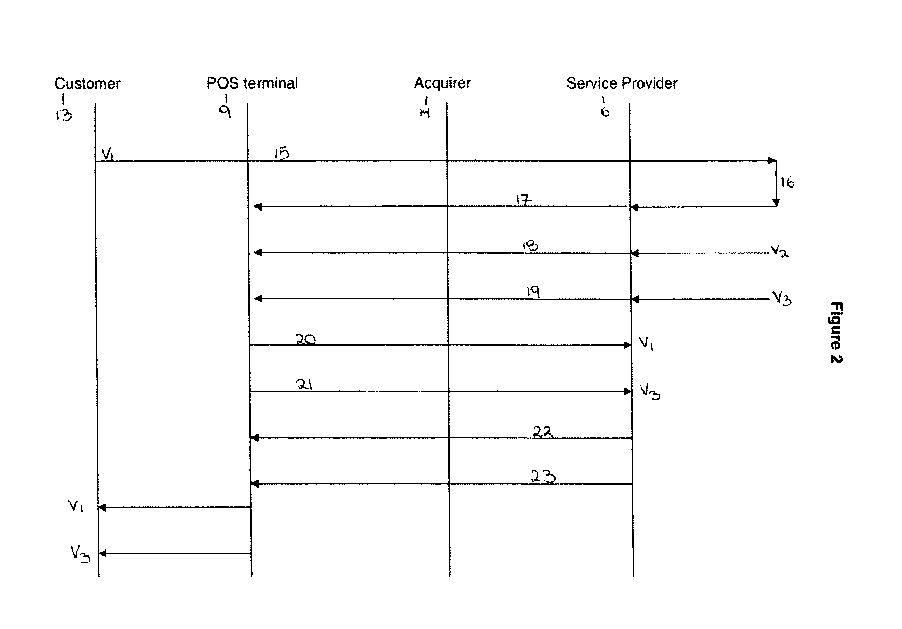

Figure 2 illustrates the steps involved in redeeming a plurality of vouchers according to the method described below. A customer 13 provides a POS terminal 9 operator, or in the case of a self-service terminal, the terminal itself, with a first voucher, V₁, having an alphanumeric number 1 and a cash value 3, which cash value 3 is not related to the alphanumeric number 1. The terminal 9 generates and sends a standards compliant message 15 containing the voucher number 1 to an acquirer 14, which acquirer 14 validates the voucher number and forwards it to a service provider 6, or directly to the service provider 6. The service provider authenticates or validates the voucher number 1 and in the event that the voucher number is valid sets the flag 16 in the message to pre-authorisation. In addition, the service provider searches a database for a URN associated to said voucher number 1 for any additional vouchers, V₂, V₃, associated with the same URN. If any further vouchers are found, the service provider generates a pre-authorisation message containing the voucher numbers 18, 19 for the additional vouchers V₂, V₃ in addition to the pre-authorisation message 17 relating to the first voucher V₁,

When the POS terminal 9 receives the pre-authorisation messages 17, 18, 19, the customer 13 is informed that additional vouchers V₂, V₃ are available for the transaction. In the embodiment illustrated in this Figure, the customer 13 is asked if he or she would like to redeem any additional vouchers and, if the answer is positive, which ones. In this illustration, the customer 13 chooses to redeem V₃ in addition to the first voucher V₁. As a result, the operator, or the customer in a self-service terminal 9, selects the appropriate options and redemption messages 20, 21 are sent from the terminal 9 to the service provider 6. Once the redemption messages 20, 21 are received, the service provider 6 cancels the vouchers V₁, V₃ and generates messages 22, 23 authorising payment corresponding to the vouchers V₁, V₃ cash value. Alternatively, if the voucher or vouchers are redeemable a plurality of times the service provider 6 reduces the number of balance of uses left against the voucher or vouchers, cancels those vouchers which are only redeemable once, and generates the appropriate authorisation messages 22, 23 corresponding to the cash value of the vouchers V₁, V₃. The terminal 9 will deduct the cash value of vouchers V₁, V₃ from the total sum of the purchase or apply the relevant promotional incentive, for instance a "Buy one, get one free" offer or an overall percentage of discount of basket value.

In a first example relating to a promotion on perfume, participating retailers are provided with a card comprising a magnetic stripe or a chip and having the same physical size and properties as a standards compliant credit card. The card is provided with a 6 digit card number associated with an Issuer Identification Number (IIN) provided by the local administrator of card payments schemes, which is APACS in the UK. Further, the first 6-digits may alternatively be programmed into the EPOS software to pre-populate the payment message as these digits are common to all such transactions and to be activated by pressing a button on the EPOS terminal.

When a customer wishes to redeem a voucher, the retailer uses the card to capture the card number and or voucher code, for example by swiping the card in a magnetic stripe reader or inserting/touching the RFID chip on a chip reader. The EFTPOS terminal then sends a standards compliant message containing the voucher redemption code to the service provider, which service provider performs a validation check in the conventional manner. Alternatively, the EFTPOS terminal sends the message to an acquirer, which acquirer validates the voucher redemption code and forwards it to the service provider. The service provider authenticates the voucher number. If the voucher number is invalid the service provider returns a standard refusal message, otherwise, the message is converted into a pre-authorisation message. This is achieved by setting the flag in the message to pre-authorisation; as a result, the EFT network regards the modified message as a pre-authorisation message.

Once the first voucher number is captured by the service provider, and providing that the service provider has a URN linked with this first voucher number, such as, but not limited to, a mobile phone number, an e-mail address or any unique identifier, the service provider can associate multiple voucher numbers with this URN, such that the service provider checks the system for any other vouchers associated with the URN. The service provider holds information and voucher codes associated with each URN, although the vouchers may have been issued as part of different voucher schemes.

If the service provider determines that more than one voucher can be redeemed in this transaction, the service provider transmits a plurality of pre-authorisation messages relating to the first voucher and/or any other vouchers associated with the URN back to the POS terminal. Alternatively, the service provider may avoid linking any additional vouchers associated with the same URN if the first voucher issuer has requested this service. If a plurality of messages is sent, the POS terminal operator, or the terminal itself in the case of a self-service terminal, can inform the customer that multiple vouchers are available for the transaction and ask the whether the customer wishes to redeem any of the additional vouchers linked to the same URN.

If the customer's answer is negative, the POS terminal sends a message to the service provider requesting redemption of the first voucher only. When the redemption message is received, the service provider sends an authorisation message and cancels the voucher. Alternatively, if a voucher is redeemable a plurality of times, the service provider reduces the number of balance of uses left against the voucher. As in this example the service provider and the POS regard the voucher code to be a monetary sum, the service provider will authorise a payment corresponding to the voucher value, in this case £5.00. As a result, this monetary sum will be deducted from the total purchase sum.

If the customer chooses to use the associated vouchers, the operator or terminal can request the client to select which vouchers will be redeemed in the transaction. After the vouchers have been selected, the POS terminal sends a plurality of messages to the service provider, one message relating to each selected voucher, requesting redemption of said selected vouchers. At this point the POS terminal may optionally perform a check on each reference linked to each voucher to ensure that the transaction conditions of each voucher have been met. For example, a given voucher may be valid only if the total transaction value exceeds a pre-determined amount whilst another voucher may only be valid if the transaction involves a specified product or range of products.

When any optional steps are completed, the service provider sends a plurality of authorisation messages to the POS terminal and cancels the vouchers or, if applicable, reduces the number of balance of use against any given vouchers. Again, as the EFT network and the service provider's system consider the voucher codes to be monetary sums, an authorisation for a monetary amount, which amount will be equal to the sum of voucher value amounts, will be received by the POS terminal. Accordingly, these sums will be deducted from the total sum.

After all relevant payment authorisations are completed, the POS terminal concludes the transaction and prints a paper receipt containing redemption reference codes and a record of the transaction, thereby enabling the POS terminal to provide a paper trail for the retailer and service provider in the standard manner. This enables the retailer to receive net settlement of the relevant sums.

In a second example relating to a promotion on wine, participating retailers provide their customers with a voucher, which voucher is distributed on a card, such as a swipe card or a card with an RFID tag, which card has the same physical size and properties as a standards compliant credit card. The card is provided with a 16 digit number comprising six digits, for instance 256115, the retailers INN, followed by 10 digits. As modern chip and pin P05 terminals support alphanumeric characters, the number may consist of digits and/or letters, although for simplicity digits will mostly be used.

When the customers wishes to redeem the voucher, the retailer swipes the swipe card through their standard EFTPOS terminal and when prompted for the value of the authorisation request keys in the voucher code and hits return. The EFTPOS terminal then sends a message requesting authorisation to the service provider or an acquirer, which validates the request and then forwards the message to the service provider. In this case the service provider regards the voucher code to be a monetary sum, for example, £5.99. The service provider recognises from the card number that the request relates to an electronic voucher. The voucher number is then authenticated. If the voucher number is invalid the service provider returns a standard refusal message. Alternatively, the service provider converts the message into a pre-authorisation message. Subsequently, the transaction proceeds as detailed above. For example, if the customer buys an New Zealand Sauvignon Blanc, a voucher redemption offer for a New Zealand Pinot Noir could be sent.

In a third example, relating to a promotion not restricted to a specific retailer-chain or brand, such as a promotion in a newspaper or magazine, where independent and convenience stores account for a significant proportion of sales of these products, the promoter provides selected products with an additional barcode, or alternatively the standard barcode is altered to produce a reduced sum at the point of sale. When this barcode is scanned by the POS terminal a message requesting a validation check is sent to the acquirer. Next, the acquirer requests authorisation from the service provider.

The service provider will validate or refuse the authorisation message. If the voucher number contained in the message is invalid, a standard refusal message is issued. Otherwise, the service provider converts the message into pre-authorisation format and the transaction proceeds as detailed above.

In a fourth example, relating to a retailer's customer loyalty scheme, a retailer provides customers with a card comprising a magnetic stripe or a chip. In this instance, the scheme allows customers to collect a certain number of points, for example 2, for every £1 they spend in the store if they present the card at the time of the purchase. The scheme allows customers to use these points as cash-value vouchers when they reach a specific number of points, alternatively, each point may be given a monetary value. When customers wish to redeem these vouchers, they advise the POS terminal operator, or if the customer is using a self-service POS terminal, the terminal itself, that they intend to redeem the vouchers. The POS terminal then generates a concatenated string containing the card number relating to the monetary sum of the voucher which is transmitted to the acquirer or the service provider for validation. In this instance, the voucher number is not related to the card number for security reasons. If a message containing a voucher number is validated, the service provider converts the message into a pre-authorisation message. The transaction then proceeds as described previously.

It is obvious from the above examples that in any of the situations described the voucher number may also be entered manually into the system. It is also obvious from the above examples that if the voucher issuer has requested to avoid linking a voucher generated as part of a specific promotion to any other vouchers associated to the same URN, the service provider may add a request in the system so that after the voucher number is authenticated the message is not converted into a pre-authorisation message. In this case, the service provider may, if requested by the voucher issuer, perform a check on the voucher number to ensure that the transaction conditions of each voucher have been met and, subsequently, send an authorisation message to the POS terminal and cancel the voucher or reduce the number of balance of uses against said voucher. Otherwise, the service provider would directly send an authorisation message to the POS and either cancel the voucher or reduce the number of balance of uses against it.

Another embodiment of the present invention will now be described in greater detail with reference to an example.

Amongst other factors, the introduction of free newspapers has resulted in a decrease on the volume of paid-for newspapers sales. Further, currently, it is possible to obtain news and other articles from electronic sources often without payment. As a result, publishing groups have focused in generating customer loyalty by setting up voucher schemes and reducing the time or inconvenience associated with purchase.

In the example, relating to a voucher scheme involving a plurality of publications, a publisher or group of publishers provides customers with a contactless, magnetic or chip card. The card has the same physical size and properties as a standards compliant credit card and has a 6 digit card number associated with an Issuer Identification Number (IIN) provided by the local administrator of card payments schemes, which is APACS in the UK. Further, the first 6-digits may be alternatively be programmed into the EPOS software to pre-populate the message with information for the scheme. The information would be subsequently activated by pressing a button on the EPOS terminal.

Vouchers are provided with a number comprising a first element, which first element is identical for all vouchers relating to a specific promotion in relation to several publications, and a second element, which second element is unique for a specific publication. When a customer wishes to redeem a voucher relating to a specific publication, vendors use the card to capture the card number or the voucher number, for example by swiping the card in a magnetic stripe reader or inserting/touching the chip on a chip reader. The POS terminal then sends a message to an acquirer or a service provider for validation. In the first case, after the validation check is performed, the message is forwarded to the service provider. Once the message is received by the service provider, either directly from the POS terminal or via the acquirer, the service provider authenticates the voucher number. If the voucher number is invalid the service provider returns a standard refusal message. In the alternative, the service provider converts the message into a pre-authorisation message and searches its system for any valid vouchers having a voucher number with a first element identical to that of the first voucher number.

Once the first voucher number having a specified first element is captured by the service provider, and providing that the service provider has a URN linked to this voucher number having a specific first element, such as, but not limited to, a mobile phone number, an e-mail address or any unique identifier, the service provider can associate multiple vouchers having an identical first element and unique second element with this URN, such that the service provider checks the system for any other vouchers numbers having an identical first element and a unique second element as they will be associated with the same URN. If a plurality of voucher numbers comprising the same first element is found, the service provider sends a plurality of pre-authorisation messages to the POS terminal.

The terminal operator, or in the case of a self-service terminal, the terminal itself, can inform the customer that other vouchers are available and ascertain whether the customer wishes to redeem the voucher relating to a specific publication only or whether the customer wishes to redeem any other vouchers having a voucher number with an identical first element. As a result, a customer may be informed that purchase of a second specific publication is for example, free or discounted if bought in conjunction with the first specific publication. Alternatively, a customer may be reminded that the latest edition of a periodical publication has been published recently and provided with the option to purchase it at a discounted price if a voucher having a voucher number with a first element identical to that of the first voucher number has been generated for that publication.

If the customer only wishes to redeem the first voucher, the POS terminal sends a message to the service provider requesting redemption of this voucher only. When the redemption message is received, the service provider sends an authorisation message and cancels the voucher. Alternatively, if a voucher is redeemable a plurality of times, the service provider reduces the number of balance of uses left against the voucher. In this example the service provider translates the voucher code into a monetary sum and authorises a payment corresponding to the voucher value, for example £1.00, thus, the POS regards the voucher code to be a monetary sum. As a result, this monetary sum will be deducted from the total purchase sum at the point of sale.

If the customer chooses to redeem any additional vouchers having a voucher number with a first element identical to that of the first voucher number, the operator or terminal can request the client to select which vouchers having the number with a shared first element will be redeemed in the transaction. After the vouchers having a shared first element have been selected, the POS terminal sends a plurality of messages to the service provider, one message relating to each selected voucher having the shared first element, requesting redemption of said selected vouchers. At this point the POS terminal may optionally perform a check on each reference linked to each voucher to ensure that the transaction conditions of each voucher have been met. For example, a given voucher may be valid only if the total transaction value exceeds a pre-determined amount whilst another voucher may only be valid if the transaction involves a specified publication or range of publications. When any optional steps are completed, the service provider sends a plurality of authorisation messages to the POS terminal and cancels the vouchers having the shared first element or, if applicable, reduces the number of balance of uses against any of one of these vouchers. Again, as the system considers the voucher codes having the shared first element to be monetary sums; consequently, these sums will be deducted from the total sum.

In one embodiment there is provided a method for enabling redemption of a plurality of vouchers in a single transaction using a standards compliant electronic funds transfer point of sale terminal, comprising the steps of:
a) providing a first voucher having an alphanumeric number and a cash value, which cash value is not related to the number, which voucher is associated with a unique reference number,
b) generating and sending a standards compliant message from the standards compliant electronic funds transfer point of sale terminal to a service provider,
c) identifying the unique reference number associated with the first voucher,
d) searching a database for vouchers associated with said unique reference number, converting the first redemption message into a pre-authorisation message,
e) generating a pre-authorisation message for the further voucher or vouchers associated with the unique reference number, and
f) sending a pre-authorisation message for each of the vouchers associated with the unique reference number to the standards compliant point of sale terminal.

In a second embodiment there is a method according to the first embodiment, wherein the alphanumeric numbers of the first voucher and the voucher or vouchers associated with the unique reference number comprise a first element, said first element being identical in the first voucher and the associated vouchers, and a second element, said second element being different in each voucher associated with the unique reference number thereby enabling identification of all vouchers having an identical first element and a second element distinct from the second element of the first voucher, so that a pre-authorisation message for each of said vouchers can be sent to the standards compliant point of sale terminal.

In a third embodiment there is a method according to embodiment 1 or embodiment 2, wherein the standards compliant message comprises a merchant ID and the service provider checks that the merchant can participate in the redemption of the voucher and in the event that the merchant cannot participate, the service provider proceeds with the authorisation or non-authorisation of the redemption of the first voucher.

In a fourth embodiment there is a method according to any one of embodiments 1 to 3, wherein pre-authorisation messages for the vouchers associated the unique reference number are linked by the terminal thereby enabling redemption of all or none of the vouchers associated to the unique reference number.

In a fifth embodiment there is a method according to any one of embodiments 1 to 3, wherein selective redemption of one or more associated vouchers is enabled by the terminal such that a customer may decide which vouchers, if any, will be redeemed.

In a sixth embodiment there is a method according to any one of embodiments 1 to 3, wherein the terminal enables selective redemption of only one associated voucher.

In a seventh embodiment there is a method according to any of the preceding embodiments, wherein the first voucher is distributed via a portable electronic device.

In an eighth embodiment there is a method according to any one of embodiments 1 to 6, wherein the first voucher is distributed via a card having a chip or a magnetic stripe.

In a ninth embodiment there is a method according to embodiment 8, wherein the first voucher is distributed via a contactless card.

In a tenth embodiment there is a method according to any one of embodiments 1 to 6, wherein the first voucher is a paper voucher.

In an eleventh embodiment there is a method according to any one of embodiments 1 to 7 or embodiment 10, wherein the first voucher comprises a barcode.

In a twelfth embodiment there is a method according to any of the preceding embodiments, wherein the POS terminal authorises or refuses redemption of a voucher or a plurality of vouchers only if conditions of use specified on the database have been met.

In a thirteenth embodiment there is a method according to any of the preceding embodiments, wherein when any of the vouchers are redeemable a plurality of times, the service provider stores a balance of uses against the voucher number, which balance is reduced on redemption.

In a fourteenth embodiment there is a method of enabling redemption of a plurality of vouchers, substantially as described herein, with reference to, and as illustrated in the accompanying drawings.

## Claims

1. A method for enabling redemption of a plurality of vouchers in a single transaction using a standards compliant electronic funds transfer point of sale terminal, comprising the steps of:
a) providing a first voucher having an alphanumeric number and a cash value, which cash value is not related to the number, which voucher is associated with a unique reference number,
b) generating and sending a standards compliant message relating to the first voucher from the standards compliant electronic funds transfer point of sale terminal to a service provider,
c) identifying the unique reference number associated with the first voucher,
d) searching a database for vouchers associated with said unique reference number,
e) converting the first redemption message into a pre-authorisation message, f)generating a pre-authorisation message for the further voucher or vouchers associated with the unique reference number, and
g) sending a pre-authorisation message for each of the vouchers associated with the unique reference number to the standards compliant point of sale terminal.

2. A method according to Claim 1, wherein the step of providing the first voucher comprises distributing the first voucher to a customer via a portable electronic device or via a card having a chip or a magnetic stripe or via a contactless card or via a paper voucher.

3. A method according to Claim 2 further comprising the step of presenting the first voucher on the portable electronic device or card or paper voucher for redemption at the standards compliant point of sale terminal prior to the step of generating and sending the standards compliant message.

4. A method according to any of the preceding Claims, wherein the alphanumeric number of the first voucher is linked to a specific electronic device number.

5. A method according to any of the preceding Claims, wherein the unique reference number comprises a mobile phone number or an e-mail address.

6. A method according to any of the preceding Claims, wherein the alphanumeric numbers of the first voucher and the voucher or vouchers associated with the unique reference number comprise a first element, said first element being identical in the first voucher and the associated vouchers, and a second element, said second element being different in each voucher associated with the unique reference number thereby enabling identification of all vouchers having an identical first element and a second element distinct from the second element of the first voucher, so that a pre-authorisation message for each of said vouchers can be sent to the standards compliant point of sale terminal.

7. A method according to any of the preceding Claims, wherein the standards compliant message comprises a merchant ID and the service provider checks that the merchant can participate in the redemption of the voucher and in the event that the merchant cannot participate, the service provider proceeds with the authorisation or non-authorisation of the redemption of the first voucher.

8. A method according to any of the preceding Claims, wherein pre-authorisation messages for the vouchers associated the unique reference number are linked by the terminal thereby enabling redemption of all or none of the vouchers associated to the unique reference number.

9. A method according to anyone of Claims 1 to 8, wherein selective redemption of one or more associated vouchers is enabled by the terminal such that a customer may decide which vouchers, if any, will be redeemed.

10. A method according to anyone of Claims 1 to 8, wherein the terminal enables selective redemption of only one associated voucher.

11. A method according to any of the preceding Claim, wherein the first voucher comprises a barcode.

12. A method according to any of the preceding Claims, wherein the POS terminal authorises or refuses redemption of a voucher or a plurality of vouchers only if conditions of use specified on the database have been met.

13. A method according to any of the preceding Claims, wherein when any of the vouchers are redeemable a plurality of times, the service provider stores a balance of uses against the voucher number, which balance is reduced on redemption.

14. A method according to any preceding Claim, wherein a service provider checks the system or searches a database for a URN (unique reference number) associated to a voucher number for any additional vouchers associated with the same URN.

15. A method according to Claim 14, wherein when the point of sale terminal receives pre-authorisation messages, a customer is informed that additional vouchers are available for the transaction, and asked whether they wish to redeem any of the additional vouchers linked to the same URN, and, if the answer is positive, which ones.

16. A method according to Claim 14 or Claim 15, wherein the point of sale terminal deducts the cash value of vouchers from the total sum of the purchase or applies a relevant promotional inventive such as a voucher redemption offer or an overall percentage of discount of basket value.

17. A method according to any one of Claims 14 to 16, wherein the POS terminal performs a check on each reference linked to each voucher to ensure that the transaction conditions of each voucher have been met.

18. A voucher system for use in a method according to any preceding Claim.
